# EUROPÄISCHE PATENTSCHRIFT

(11) **EP 1 424 154 B1**
(45) Veröffentlichungstag und Bekanntmachung des Hinweises auf die Patenterteilung: **09.01.2008**
(21) Anmeldenummer: 03104439.9
(22) Anmeldetag: 28.11.2003
(51) Int. Cl.: B23B 51/04, B23B 31/11

(54) **Werkzeugaufnahme für Kernbohrkronen**
Tool holder for core bits
Porte-outil pour trépans de forage

(30) Priorität: 30.11.2002 DE 10256050
(43) Veröffentlichungstag der Anmeldung: 02.06.2004
(73) Patentinhaber: HILTI Aktiengesellschaft, 9494 Schaan (LI)
(72) Erfinder: Gaul, Hans-Dieter, 86156, Augsburg (DE)
(74) Vertreter: Wildi, Roland

(56) Entgegenhaltungen:
- WO-A-97/15413
- DE-U- 20 102 516
- US-A- 2 324 225
- US-A- 5 598 751
- US-A1- 2001 001 276

## Beschreibung

Die Erfindung bezeichnet eine Werkzeugaufnahme für den rein drehenden Antrieb von zugeordneten Bohrwerkzeugen, insbesondere Kernbohrkronen.

Werkzeugaufnahmen für übliche Kernbohrkronen mit Innengewinde, bspw. 1 1/4" - UNC oder PIXIE, weisen eine werkzeugseitige Axialanschlagfläche zur Axialverspannung auf. Nachteilig bei derartigen lösbaren Gewindeverbindungen, bspw. nach der US4911253, sind die mühsame Montage/Demontage sowie ein mögliches Verklemmen der Gewindeverbindung.

Nach der DE3744091 weist eine schnell montierbare / demontierbare Werkzeugaufnahme für eine zugeordnete Kernbohrkrone mit einem Keilwellenprofil und zwei Konusflächen ein Innenkeilwellenprofil und zwei Innenkonusflächen auf.

Nach der DE3814365 weist eine schnell montierbare / demontierbare Werkzeugaufnahme für eine zugeordnete Kernbohrkrone mit einem speziellen hohlen Aussengewindeflansch, der maschinenseitig mit bajonettartigen Durchgangsnuten durchbrochen ist, einen stirnseitigen zylinderförmigen Führungsflansch mit radial auskragenden Drehmitnahmezapfen und ein maschinenseitig axial versetztes Aussengewinde zur Axialdruckverspannung über eine Innengewindehülse mit werkzeugseitigen Axialanschlagflächen auf.

Nach der DE19963636 weist eine schnell montierbare / demontierbare Werkzeugaufnahme für eine zugeordnete Kernbohrkrone mit stirnseitigem Innenkeilwellenprofil und axial beabstandetem innenkonisch hohlen Aussengewindeflansch einen stirnseitigen Aussenkonus auf, welchem maschinenseitig ein Keilwellenprofil und axial versetzt ein Aussengewinde für eine Innengewindehülse zugeordnet ist, wobei das Keilwellenprofil in das stirnseitige Innenkeilwellenprofil des innenkonisch hohlen Aussengewindeflansches der Kernbohrkrone eingreifbar ist.

Die Aufgabe besteht in der Realisierung einer schnell montierbaren / demontierbaren Werkzeugaufnahme für eine Kernbohrkrone, welche zu Kernbohrkronen mit Innengewinde rückwärtskompatibel ist.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen weist eine Werkzeugaufnahme für eine Kernbohrkrone ein stirnseitiges zylindrisches Keilwellenprofil und eine werkzeugseitige Axialanschlagfläche auf, wobei das Keilwellenprofil bezüglich der radialen Auskragungen zumindest stirnseitig ein Aussengewinde aufweist.

Durch das Aussengewinde auf den radialen Auskragungen des Keilwellenprofils der Werkzeugaufnahme ist mit dieser sowohl eine übliche Kernbohrkrone mit Innengewinde als auch eine schnell montierbare / demontierbare zugeordnete Kernbohrkrone verbindbar.

Vorteilhaft ist das Aussengewindemass und/oder das Innennutenmass des Keilwellenprofils als Radialführungsmass ausgebildet, welches sich über eine axiale Führungslänge grösser dem Radialführungsmass zumindest stückweise erstreckt, wodurch die zugeordnete Kernbohrkrone axial führbar ist.

Vorteilhaft ist das Keilwellenprofil mit umfänglich gleich beabstandeten, weiter vorteilhaft umfänglich gleich breiten, Axialnuten ausgebildet, wodurch sich eine symmetrische Torsionsbeanspruchung des Keilwellenprofils ergibt.

Vorteilhaft sind mindestens drei, weiter vorteilhaft genau sechs, Axialnuten vorhanden, wodurch hohe, auf die radialen Auskragungen wirkende, anzahlig aufgeteilte Tangentialkräfte übertragbar sind.

Vorteilhaft weist die Werkzeugaufnahme eine von der werkzeugseitigen Axialanschlagfläche maschinenseitig axial beabstandete maschinenseitige Axialanschlagfläche und eine weiter maschinenseitig axial beabstandete, diese werkzeugseitig axial übergreifende Innengewindehülse auf, wodurch eine axiale Zugverspannung zwischen der Werkzeugaufnahme und einem zugeordneten Aussengewinde der Kernbohrkrone aufprägbar ist.

Vorteilhaft weist die Werkzeugaufnahme eine von der werkzeugseitigen Axialanschlagfläche maschinenseitig axial beabstandete Aussenkonusfläche auf, wodurch diese in einer zugeordneten Innenkonusfläche der Kernbohrkrone zentrierbar ist.

Vorteilhaft ist die Aussenkonusfläche axial von der werkzeugseitigen Axialanschlagfläche und der maschinenseitige Axialanschlagfläche begrenzt, wodurch ein axial kurzer Konusringflansch ausgebildet wird.

Vorteilhaft bildet die Werkzeugaufnahme und eine passend zugeordnete Kernbohrkrone mit einem Innenkeilwellenprofil ein schnell montierbares / demontierbares, weiter vorteilhaft standardisiertes, Werkzeugschnittstellensystem aus, wodurch eine hohe Verbindungsqualität insbesondere bezüglich Festigkeit und Führung erzielbar ist.

Vorteilhaft ist zwischen der Innengewindehülse und der maschinenseitigen Axialanschlagfläche ein Gummiring angeordnet, wodurch ein selbständiges Lösen der Innengewindehülse durch Vibrationen verhindert wird.

Die Erfindung wird bezüglich zweier vorteilhafter Ausführungsbeispiele näher erläutert mit:
- Fig. 1: einer Darstellung als Werkzeugaufnahme für eine Kernbohrkrone in perspektivischer Explosionsdarstellung, vor der Montage mit der Kernbohrkrone; und
- Fig. 2: ein weiteres Ausführungsbeispiel einer Kernbohrkrone.

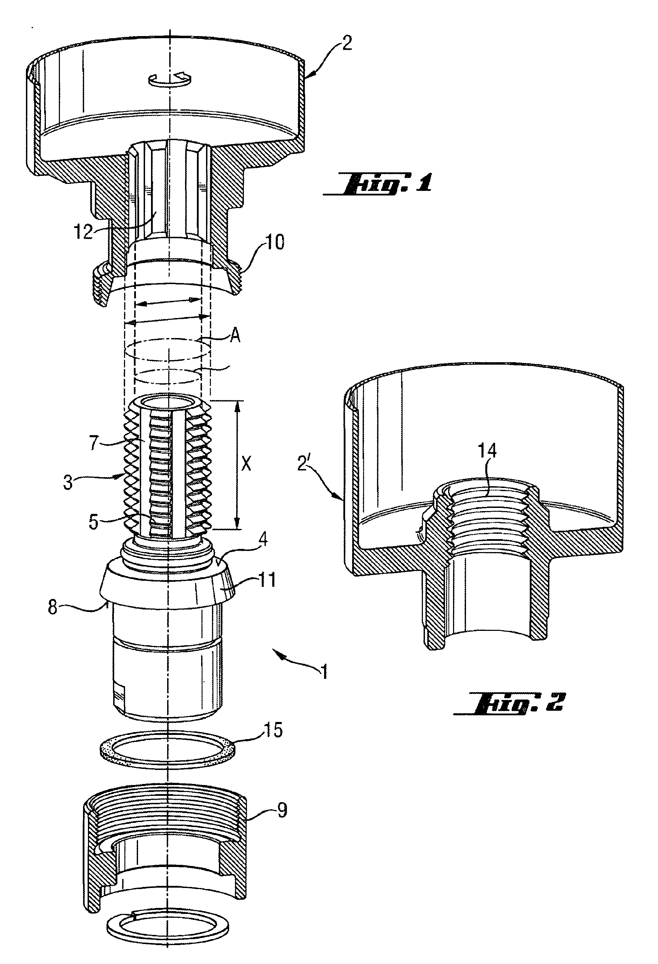

Nach der Darstellung gemäss Fig. 1 weist eine Werkzeugaufnahme 1 für eine Kernbohrkrone 2 ein stirnseitiges zylindrisches Keilwellenprofil 3 und eine werkzeugseitige Axialanschlagfläche 4 auf, wobei das Keilwellenprofil 3 bezüglich der radialen Auskragungen am stirnseitigen Ende ein 1 1/4" - UNC - Aussengewinde 5 aufweist. Das Aussengewindemass A und das Innennutenmass I des Keilwellenprofils 3 sind als Radialführungsmasse ausgebildet, welche sich durchgängig über eine axiale Führungslänge X grösser dem Radialführungsmass erstrecken. Das Keilwellenprofil 3 ist mit sechs umfänglich gleich beabstandeten, gleich breiten Axialnuten 7 ausgebildet. Die Werkzeugaufnahme 1 weist eine von der werkzeugseitigen Axialanschlagfläche 4 maschinenseitig axial beabstandet maschinenseitige Axialanschlagfläche 8 und eine weiter maschinenseitig axial beabstandete, diese werkzeugseitig axial übergreifende Innengewindehülse 9 auf, der ein Aussengewinde 10 der Kernbohrkrone 2 zugeordnet ist. Die Werkzeugaufnahme 1 weist eine von der werkzeugseitigen Axialanschlagfläche 4 maschinenseitig axial beabstandete Aussenkonusfläche 11 auf, die axial von der werkzeugseitigen Axialanschlagfläche 4 und der maschinenseitigen Axialanschlagfläche 8 begrenzt wird. Die Werkzeugaufnahme 1 und die passend zugeordnete Kernbohrkrone 2 mit einem Innenkeilwellenprofil 12 bildet ein schnell montierbares / demontierbares Werkzeugschnittstellensystem aus. Zwischen der Innengewindehülse 9 und der maschinenseitigen Axialanschlagfläche 8 ist ein Gummiring 15 angeordnet.

Eine Kernbohrkrone 2' mit einem 1 1/4" - UNC - Innengewinde 14, wie in Fig. 2 dargestellt, ist ebenfalls passend zugeordnet.

## Patentansprüche

1. Werkzeugaufnahme (1) für eine Kernbohrkrone (2, 2') mit einem stirnseitigen Keilwellenprofil (3) und einer werkzeugseitigen Axialanschlagfläche (4), **dadurch gekennzeichnet, dass** das Keilwellenprofil (3) auf den radialen Auskragungen zumindest stirnseitig ein Aussengewinde (5) aufweist.

2. Werkzeugaufnahme nach Anspruch 1, **dadurch gekennzeichnet, dass** das Aussengewindemass (A) und/oder das Innennutenmass (1) des Keilwellenprofils (3) als Radialführungsmass ausgebildet ist, welches sich über eine axiale Führungslänge (X) grösser dem Radialführungsmass zumindest stückweise erstreckt.

3. Werkzeugaufnahme nach Anspruch 1 oder 2, **dadurch gekennzeichnet, dass** das Keilwellenprofil (3) mit umfänglich gleich beabstandeten, optional umfänglich gleich breiten, Axialnuten (7) ausgebildet ist.

4. Werkzeugaufnahme nach Anspruch 3, **dadurch gekennzeichnet, dass** mindestens drei, weiter vorteilhaft genau sechs, Axialnuten (7) vorhanden sind.

5. Werkzeugaufnahme nach einem der Ansprüche 1 bis 4, **dadurch gekennzeichnet, dass** eine von der werkzeugseitigen Axialanschlagfläche (4) maschinenseitig axial beabstandete maschinenseitigen Axialanschlagfläche (8) und eine weiter maschinenseitig axial beabstandete, diese werkzeugseitig axial übergreifende Innengewindehülse (9) vorhanden ist.

6. Werkzeugaufnahme nach einem der Ansprüche 1 bis 5, **dadurch gekennzeichnet, dass** eine von der werkzeugseitigen Axialanschlagfläche (4) maschinenseitig axial beabstandet Aussenkonusfläche (11) vorhanden ist.

7. Werkzeugaufnahme nach Anspruch 6, **dadurch gekennzeichnet, dass** die Aussenkonusfläche (11) axial von der werkzeugseitigen Axialanschlagfläche (4) und der maschinenseitige Axialanschlagfläche (8) begrenzt ist.

8. Werkzeugaufnahme nach einem der vorhergehenden Ansprüche, **dadurch gekennzeichnet, dass** mit einer passend zugeordneten Kernbohrkrone (2) mit einem Innenkeilwellenprofil (12) ein schnell montierbares / demontierbares Werkzeugschnittstellensystem ausgebildet ist.

9. Werkzeugaufnahme nach einem der vorhergehenden Ansprüche, **dadurch gekennzeichnet, dass** zwischen der Innengewindehülse (9) und der maschinenseitigen Axialanschlagfläche (8) ein Gummiring (15) angeordnet ist.

## Claims

1. Tool holder (1) for a core bit (2, 2') with a spline profile (3) on the face and an axial stop face (4) on the tool side, **characterised in that** the spline profile (3) has an external thread (5) on the radial projections at least on the face side.

2. Tool holder according to claim 1, **characterised in that** the external thread mass (A) and/or the internal groove mass (I) of the spline profile (3) is made as a radial guide mass, which extends at least in parts over an axial guide length (X) greater than the radial guide mass.

3. Tool holder according to claim 1 or 2, **characterised in that** the spline profile (3) is made with axial grooves (7) peripherally at the same distance, which are optionally peripherally the same width.

4. Tool holder according to claim 3, **characterised in that** there are at least three, more advantageously precisely six, axial grooves (7).

5. Tool holder according to one of claims 1 to 4, **characterised in that** there is an axial stop face (8) on the machine side axially at a distance on the machine side from the axial stop face (4) on the tool side and an internal thread sleeve (9) also axially at a distance on the machine side, spreading over this axially on the tool side.

6. Tool holder according to one of claims 1 to 5, **characterised in that** there is an external conical face (11) axially at a distance on the machine side from the axial stop face (4) on the tool side.

7. Tool holder according to claim 6, **characterised in that** the external conical face (11) is axially limited by the axial stop face (4) on the tool side and the axial stop face (8) on the machine side.

8. Tool holder according to one of the previous claims, **characterised in that** a quickly assemblable / disassemblable tool interface system is made with a suitably allocated core bit (2) with an internal spline profile (12).

9. Tool holder according to one of the previous claims, **characterised in that** a rubber ring (15) is arranged between the internal thread sleeve (9) and the axial stop face (8) on the machine side.

## Revendications

1. Raccord d'outil (1) pour une couronne de carottage (2, 2'), comprenant un profil frontal à empreinte cannelée (3) et une surface de butée axiale côté outil (4), **caractérisé en ce que** le profil à empreinte cannelée (3) comporte au moins frontalement un filetage extérieur (5) sur les parties radiales saillantes.

2. Raccord d'outil selon la revendication 1, **caractérisé en ce que** la dimension de filetage extérieur (A) et/ou la dimension de rainure intérieure (1) du profil à empreinte cannelée (3) est conformée en dimension de guidage radial, laquelle s'étend au moins de manière segmentée sur une longueur de guidage axial (X) supérieure à la dimension de guidage radial.

3. Raccord d'outil selon la revendication 1 ou 2, **caractérisé en ce que** le profil à empreinte cannelée (3) comporte des rainures axiales (7) circonférentiellement équidistantes, optionnellement de largeur circonférentielle identique.

4. Raccord d'outil selon la revendication 3, **caractérisé en ce qu'**il est prévu au moins trois, plus avantageusement encore six rainures axiales (7).

5. Raccord d'outil selon une des revendications 1 à 4, **caractérisé en ce qu'**il est prévu une surface de butée axiale côté machine (8), distante axialement côté machine de la surface de butée axiale côté outil (4), et un manchon taraudé (9), lequel est encore plus distant axialement côté machine et recouvre axialement ladite surface de butée axiale (8) côté outil.

6. Raccord d'outil selon une des revendications 1 à 5, **caractérisé en ce qu'**il est prévu une surface conique extérieure (11) distante axialement côté machine de la surface de butée axiale côté outil (4).

7. Raccord d'outil selon la revendication 6, **caractérisé en ce que** la surface conique extérieure (11) est délimitée axialement par la surface de butée axiale côté outil (4) et par la surface de butée axiale côté machine (8).

8. Raccord d'outil selon une des revendications précédentes, **caractérisé en ce qu'**un système d'interface d'outil à montage/démontage rapide comporte une couronne de carottage (2) associée de manière appropriée et pourvue d'un profil à empreinte cannelée (12).

9. Raccord d'outil selon une des revendications précédentes, **caractérisé en ce qu'**un anneau en caoutchouc (15) est disposé entre le manchon taraudé (9) et la surface de butée axiale côté machine (8).
